# EUROPÄISCHE PATENTANMELDUNG

(11) **EP 3 438 558 A1**
(43) Veröffentlichungstag der Anmeldung: **06.02.2019**
(21) Anmeldenummer: 17184778.3
(22) Anmeldetag: 03.08.2017
(51) Int. Cl.: F24D 19/10, F24D 3/10

(54) **VERFAHREN ZUM BETRIEB EINER MISCHEINRICHTUNG SOWIE MISCHEINRICHTUNG**

(71) Anmelder: Grundfos Holding A/S, 8850 Bjerringbro (DK)
(72) Erfinder: BLAD, Thomas, 8850 Bjerringbro (DK); BLAD, Christian, 9000 Aalborg (DK)
(74) Vertreter: Patentanwälte Vollmann & Hemmer

(57) **Zusammenfassung**

Die Erfindung betrifft ein Verfahren zum Betrieb einer Mischeinrichtung in einer Heizungsanlage, in welcher zwei Heizmediumströme unterschiedlicher Temperaturen zum Einstellen der Temperatur des Heizmediums gemischt werden, wobei die Mischeinrichtung zumindest ein das Heizmedium förderndes Umwälzpumpenaggregat (24; 46) aufweist, wobei das zumindest eine Umwälzpumpenaggregat (24; 46) in seiner Drehzahl in Abhängigkeit eines in dem Heizmedium erfassten Temperaturwertes geregelt wird, sowie eine Mischeinrichtung zum Mischen zweier Heizmediumströme.

## Beschreibung

Die Erfindung betrifft ein Verfahren zum Betrieb einer Mischeinrichtung in einer Heizungsanlage sowie eine Mischeinrichtung.

In Heizungsanlagen werden häufig Mischer bzw. Mischeinrichtungen eingesetzt, um die Temperatur eines Heizmediums einstellen und insbesondere reduzieren zu können. Dies ist insbesondere für Fußbodenheizungen erforderlich, welche mit einer geringeren Vorlauftemperatur betrieben werden, als sie von einem Heizkessel zur Verfügung gestellt wird. In einer solchen Mischeinrichtung wird erwärmtes Heizmedium, insbesondere Wasser, mit kaltem Heizmedium aus dem Rücklauf zur Temperierung gemischt. Hierzu werden in der Regel Mischventile eingesetzt, welche thermostatisch oder elektromotorisch angetrieben werden, um das Mischungsverhältnis zur Anpassung der Temperatur zu ändern.

Darüber hinaus sind in Heizungsanlagen in der Regel mehrere Umwälzpumpenaggregate erforderlich, um das Heizmedium bzw. den Wärmeträger durch die Heizkreise zu fördern.

Es ist Aufgabe der Erfindung, den Betrieb einer solchen Heizungsanlage dahingehend zu optimieren, dass eine höhere Energieeffizienz bei einem einfachen Aufbau der Heizungsanlage erreicht werden kann.

Diese Aufgabe wird gelöst durch ein Verfahren zum Betrieb einer Mischeinrichtung in einer Heizungsanlage mit den in Anspruch 1 angegebenen Merkmalen sowie durch eine Mischeinrichtung mit den in Anspruch 8 angegebenen Merkmalen. Bevorzugte Ausführungsformen ergeben sich aus den zugehörigen Unteransprüchen, der nachfolgenden Beschreibung sowie den beigefügten Figuren.

Das erfindungsgemäße Verfahren dient zum Betrieb einer Mischeinrichtung in einer Heizungsanlage, wobei unter einer Heizungsanlage im Sinne der vorliegenden Erfindung grundsätzlich eine Anlage zum Temperieren eines Raumes oder einer Anlage verstanden wird, unabhängig davon, ob sie der Erwärmung oder der Kühlung dient. D. h., unter einer Heizungsanlage im Sinne dieser Erfindung ist auch eine Klimaanlage zu verstehen, auch wenn nachfolgend lediglich der Begriff "Heizungsanlage" verwendet wird.

Das Verfahren kommt zum Einsatz in einer Mischeinrichtung, in welcher zwei Heizmediumströme unterschiedlicher Temperaturen zum Einstellen der Temperatur des Heizmediums gemischt werden. Derartige Mischungen finden beispielsweise in Fußbodenheizungen statt, in welchen einem Vorlauf mit hoher Temperatur kaltes Heizmedium aus einem Rücklauf zugemischt wird, um die Heizmediumtemperatur zu reduzieren. Umgekehrt kann einem im Kreislauf gefördertem Heizmedium eine erforderliche Menge von erwärmtem Heizmedium zugemischt werden, um die Temperatur des im Kreislauf geförderten Heizmediums zu erhöhen. Die Mischeinrichtung, in welcher das Verfahren zum Einsatz kommt, weist darüber hinaus ein das Heizmedium förderndes Umwälzpumpenaggregat auf. Erfindungsgemäß ist vorgesehen, dieses Umwälzpumpenaggregat in seiner Drehzahl in Abhängigkeit eines in dem Heizmedium erfassten Temperaturwertes zu regeln. D. h., das Umwälzpumpenaggregat weist eine Drehzahlregelung und insbesondere einen Drehzahlsteller auf, über welchen die Drehzahl veränderbar ist. Dies kann beispielsweise über einen mittels eines Frequenzumrichters angesteuerten elektrischen Antriebsmotor geschehen. In bekannten Heizungssystemen werden die Umwälzpumpenaggregate in Abhängigkeit des Durchflusses und/oder des Druckes geregelt, d. h. die Drehzahl wird so angepasst, dass ein gewünschter Durchfluss und/oder ein erwünschter Druck ausgangsseitig des Umwälzpumpenaggregates erreicht wird. Im Unterschied dazu soll nun erfindungsgemäß ein gewünschter Temperaturwert erreicht werden und das Umwälzpumpenaggregat wird in seiner Drehzahl entsprechend temperaturabhängig geregelt.

Vorzugsweise wird die Drehzahl des zumindest einen Umwälzpumpenaggregates derart geregelt, dass der erfasste Temperaturwert einem vorbestimmten Temperatursollwert entspricht oder angenähert wird, wobei der Temperatursollwert vorzugsweise abhängig von einer Raumtemperatur und/oder einer Außentemperatur vorgegeben wird. So kann der Temperatursollwert beispielsweise über eine Heizkurve ermittelt werden, welche den Temperatursollwert außen- und/oder raumtemperaturabhängig vorgibt, wie es in modernen Heizungssystemen üblich ist. Gemäß dieser bevorzugten Ausführungsform der Erfindung wird der gewünschte Temperatursollwert in der Mischeinrichtung durch entsprechende Drehzahlanpassung des Umwälzpumpenaggregates erreicht. D. h., die Drehzahl des Umwälzpumpenaggregates wird so verändert, dass der erfasste Temperaturwert dem Temperatursollwert angenähert wird oder idealerweise diesen erreicht.

Die beiden Heizmediumströme werden bevorzugt an einem Mündungs- bzw. Mischpunkt gemischt und der Temperaturwert wird stromabwärts des Mischpunktes in dem Heizmedium erfasst. So kann durch Drehzahlregelung bzw. Drehzahleinstellung des Umwälzpumpenaggregates die Heizmediumtemperatur stromabwärts des Mischpunktes geregelt bzw. angepasst werden.

Weiter bevorzugt bewirkt das zumindest eine Umwälzpumpenaggregat zumindest einen der beiden Heizmediumströme. D. h., das Umwälzpumpenaggregat ist so angeordnet, dass es das Heizmedium fördert bzw. umwälzt. Vorzugsweise ist das Umwälzpumpenaggregat dabei stromabwärts eines Mischpunktes angeordnet, sodass es das gemischte Heizmedium fördert. Das bedeutet, die Mischung der beiden Heizmediumströme erfolgt saugseitig des Umwälzpumpenaggregates.

Gemäß einer besonderen Ausführungsform der Erfindung bildet das zumindest eine Umwälzpumpenaggregat, welches in seiner Drehzahl in Abhängigkeit eines in dem Heizmedium erfassten Temperaturwertes geregelt wird, ein erstes Umwälzpumpenaggregat und es ist ein zweites Umwälzpumpenaggregat vorhanden, welches einen der Heizmediumströme bewirkt. Dabei kann das erste Umwälzpumpenaggregat in einem der beiden Heizmediumströme angeordnet sein oder aber, wie vorangehend beschrieben, stromabwärts des Mischpunktes, sodass es die gemischten Heizmediumströme fördert. Wenn das erste Umwälzpumpenaggregat, welches in seiner Drehzahl temperaturabhängig geregelt wird, stromabwärts des Mischpunktes angeordnet ist, ist vorzugsweise das zweite Umwälzpumpenaggregat so angeordnet, dass es nur einen der beiden Heizmediumströme bewirkt. In diesem Fall kann das zweite Umwälzpumpenaggregat beispielsweise druck- oder durchflussabhängig geregelt sein. Es ist jedoch auch eine umgekehrte Anordnung denkbar, in welcher das temperaturabhängig geregelte Umwälzpumpenaggregat lediglich in einem der beiden Heizmediumströme angeordnet ist und dann vorzugsweise ein zweites Umwälzpumpenaggregat stromabwärts des Mischpunktes angeordnet ist, welches konventionell druck- bzw. durchflussabhängig geregelt ist.

Weiter bevorzugt bewirkt das zumindest eine Umwälzpumpenaggregat zumindest einen der beiden Heizmediumströme, wobei das zumindest eine Umwälzpumpenaggregat vorzugsweise das Heizmedium stromabwärts eines Mischpunktes der beiden Heizmediumströme fördert. Wenn das Umwälzpumpenaggregat stromabwärts des Mischpunktes angeordnet ist, wirkt es auf beide Heizmediumströme.

Weiter bevorzugt bildet das zumindest eine Umwälzpumpenaggregat, welches in seiner Drehzahl in Abhängigkeit eines in dem Heizmedium erfassten Temperaturwertes geregelt wird, ein erstes Umwälzpumpenaggregat und es ist ein zweites Umwälzpumpenaggregat vorhanden, welches vorzugsweise in einem der Heizmediumströme wirkt. So kann beispielsweise das temperaturabhängig geregelte Umwälzpumpenaggregat in der vorangehend beschriebenen Weise stromabwärts eines Mischpunktes angeordnet sein und so auf beide Heizmediumströme wirken, während ein zweites Umwälzpumpenaggregat in einem der Heizmediumströme wirkt und dort einen Vordruck stromaufwärts des Mischpunktes bereitstellt. So kann z. B. erwärmtes Heizmedium nach Art einer Einspritz-Schaltung am Mischpunkt zugeführt werden.

Das zweite Umwälzpumpenaggregat kann vorzugsweise in seiner Drehzahl in Abhängigkeit eines Druckes und/oder eines Durchflusses des Heizmediums oder aber in Abhängigkeit eines in dem Heizmedium erfassten Temperaturwertes geregelt sein. Bei Verwendung von zwei Umwälzpumpenaggregaten in der vorangehend beschriebenen Weise ist es somit möglich, beide temperaturabhängig zu regeln. Es ist jedoch auch möglich, nur eines der Umwälzpumpenaggregate in der beschriebenen Weise in Abhängigkeit eines Temperaturwertes, welcher im Heizmedium erfasst wird, zu regeln. Dieses temperaturgeregelte Umwälzpumpenaggregat kann beispielsweise ein Umwälzpumpenaggregat sein, welches stromabwärts des Mischpunktes angeordnet ist. Es kann jedoch auch ein Umwälzpumpenaggregat sein, welches nur in einem der Heizmediumströme wirkt. In letzterem Fall könnte ein Umwälzpumpenaggregat, welches stromabwärts des Mischpunktes angeordnet ist, dann beispielsweise in herkömmlicher Weise auch lediglich druck- und/oder durchflussabhängig in seiner Drehzahl geregelt werden. Es ist jedoch bevorzugt, dass in einem Heizungssystem zumindest eines der vorhandenen Umwälzpumpenaggregate, welches hydraulisch auf einen oder beiden Heizmediumströme der Mischeinrichtung wirkt, temperaturabhängig geregelt wird, um so durch Drehzahländerung des Umwälzpumpenaggregates das Mischungsverhältnis zwischen den Heizmediumströmen zu variieren und so eine gewünschte Solltemperatur im Heizmedium durch Regelung des Umwälzpumpenaggregates zu erreichen.

Gemäß einer besonderen Ausführungsform des erfindungsgemäßen Verfahrens ist vorgesehen, vor der Inbetriebnahme der vorangehend beschriebenen temperaturabhängigen Drehzahlregelung des Umwälzpumpenaggregates eine Voreinstellung, insbesondere eine manuelle Voreinstellung des Systems bzw. der Mischeinrichtung mit folgenden Schritten vorzunehmen. In einem ersten Schritt wird das Umwälzpumpenaggregat auf einen erforderlichen Differenzdruck eingestellt. So wird sichergestellt, dass das Umwälzpumpenaggregat für den jeweiligen Heizkreis den erforderlichen Differenzdruck erzeugt. D. h., in diesem ersten Schritt erfolgt eine hydraulische Anpassung der Einstellung des Umwälzpumpenaggregates an die Anlage. In einem nächsten Schritt werden die beiden Heizmediumströme manuell so eingestellt, dass eine gewünschte Temperatur des Heizmediums erreicht wird. Als gewünschte Temperatur des Heizmediums kann ein Vorlauftemperaturwert herangezogen werden, welcher sich bei gegebenen Umgebungsbedingungen, beispielsweise einer gegebenen Außentemperatur, nach einer Heizkurve ergeben würde. Diese manuelle Voreinstellung der Heizmediumströme erfolgt bevorzugt über Durchflussregulierventile, welche in den Rohrleitungen für die Heizmediumströme vorgesehen sind und insbesondere in die Mischeinrichtung integriert sein können. Die Ventile sind dabei vorzugsweise manuell einstellbar. Durch diese Voreinstellungen werden unterschiedliche hydraulische Widerstände, welche auf die beiden Heizmediumströme wirken, ausgeglichen und so eine hydraulische Grundeinstellung vorgenommen. Nach dieser Voreinstellung wird dann die Temperaturregelung durch Drehzahlanpassung des Umwälzpumpenaggregates in Betrieb genommen. Aufgrund der vorgenommenen Voreinstellung reichen dann geringfügige Drehzahländerungen des Umwälzpumpenaggregates aus, um eine Temperaturanpassung bzw. -regelung vornehmen zu können, beispielsweise durch Veränderung eines Mischungsverhältnisses in der Mischeinrichtung.

Neben dem vorangehend beschriebenen Verfahren ist Gegenstand der Erfindung auch eine Mischeinrichtung, welche ausgebildet ist zur Verwendung in einer Heizungsanlage zum Mischen zweier Heizmediumströme. Die Mischeinrichtung ist dabei insbesondere zur Ausführung des vorangehend beschriebenen Verfahrens ausgebildet. So wird bezüglich bevorzugter Merkmale der Mischeinrichtung auch auf die vorangehende Beschreibung verwiesen. Dort beschriebene Merkmale sind ebenfalls bevorzugte Merkmale der nachfolgend beschriebenen Mischeinrichtung.

Die erfindungsgemäße Mischeinrichtung weist zumindest ein das Heizmedium förderndes Umwälzpumpenaggregat auf, welches in seiner Drehzahl einstellbar, insbesondere regelbar, ausgebildet ist. Dazu weist das Umwälzpumpenaggregat bevorzugt einen elektrischen Antriebsmotor mit einem Drehzahlsteller, bevorzugt unter Verwendung eines Frequenzumrichters, auf. Der elektrische Antriebsmotor des Umwälzpumpenaggregates ist vorzugsweise als nasslaufender elektrischer Antriebsmotor, d. h. mit einem Spaltrohr oder Spalttopf zwischen Rotor und Stator ausgebildet. Der elektrische Antriebsmotor treibt zumindest ein Laufrad des Umwälzpumpenaggregates drehend an, welches in einem Strömungsweg für das Heizmedium gelegen ist. Die Mischeinrichtung weist darüber hinaus einen Temperatursensor auf, welcher derart angeordnet ist, dass er einen Temperaturwert des Heizmediums erfasst. Dabei ist der Temperatursensor vorzugsweise an oder in einem Strömungsweg stromabwärts eines Mischpunktes angeordnet, an welchem die zwei Heizmediumströme gemischt werden.

Das Umwälzpumpenaggregat ist erfindungsgemäß mit einer Steuereinrichtung ausgestattet, welche so ausgebildet ist, dass sie die Drehzahl des Umwälzpumpenaggregates, d. h. des zumindest einen Laufrades des Umwälzpumpenaggregates in Abhängigkeit eines von dem Temperatursensor erfassten Temperaturwertes einstellt. Die Steuereinrichtung ist so ausgebildet, dass sie eine temperaturabhängige Drehzahleinstellung bzw. Drehzahlregelung des Umwälzpumpenaggregates ausführt. Auf diese Weise kann durch Drehzahländerung ein gewünschter Temperaturwert für das Heizmedium eingestellt werden.

Bevorzugt weist die Mischeinrichtung einen Misch- bzw. Mündungspunkt auf, an welchem die beiden Heizmediumströme gemischt werden. Dabei ist das zumindest eine Umwälzpumpenaggregat bevorzugt in einem Strömungsweg stromabwärts dieses Mischpunktes angeordnet. So wirkt das Umwälzpumpenaggregat auf beide Heizmediumströme, da diese an der Saugseite des Umwälzpumpenaggregates gemischt werden.

Das zumindest eine Umwälzpumpenaggregat, welches von der Steuereinrichtung in seiner Drehzahl in Abhängigkeit eines in dem Heizmedium erfassten Temperaturwertes geregelt wird, ist vorzugsweise ein erstes Umwälzpumpenaggregat und es ist ferner in der Mischeinrichtung ein zweites Umwälzpumpenaggregat vorhanden, welches weiterbevorzugt in einem der Heizmediumströme gelegen ist. So ist das temperaturabhängig geregelte Umwälzpumpenaggregat vorzugsweise stromabwärts eines Mischpunktes angeordnet, während das zweite Umwälzpumpenaggregat lediglich in einem der Heizmediumströme wirkt, sodass dieser Heizmediumstrom dem Mischpunkt mit einem Vordruck zugeführt wird. Dieses zweite Umwälzpumpenaggregat kann weiter bevorzugt in einem Heizkessel oder einer Wärmequelle angeordnet sein und/oder zusätzlich der Versorgung eines weiteren Heizkreises dienen. Bei der Zufuhr des Heizmediums zu dem Mischpunkt mit einem Vordruck wird somit eine Einspritzschaltung realisiert. Der Vordruck kann dazu beitragen, über die temperaturabhängige Drehzahlregelung des ersten Umwälzpumpenaggregates durch Veränderung der hydraulischen Widerstände in der Mischeinrichtung eine Veränderung des Mischungsverhältnisses hervorzurufen.

Das zweite Umwälzpumpenaggregat weist weiter bevorzugt eine von dem ersten Umwälzpumpenaggregat unabhängige Steuereinrichtung auf, welche bevorzugt derart ausgebildet ist, dass sie die Drehzahl des zweiten Umwälzpumpenaggregates in Abhängigkeit eines Druckes und/oder Durchflusses des Heizmediums einstellt. Alternativ oder zusätzlich ist es möglich, dass die Steuereinrichtung derart ausgebildet ist, dass sie die Drehzahl des zweiten Umwälzpumpenaggregates in Abhängigkeit einer Temperatur des Heizmediums einstellt. So ist in einer besonderen Ausführungsform auch die Möglichkeit gegeben, nur ein Umwälzpumpenaggregat in einem der beiden Heizmediumströme temperaturabhängig in seiner Drehzahl zu regeln, während ein gegebenenfalls vorhandenes zweites Umwälzpumpenaggregat auf beide Heizmediumströme wirkt und in herkömmlicher Weise druck- oder durchflussabhängig in seiner Drehzahl geregelt wird. Die unabhängige Steuereinrichtung für das zweite Umwälzpumpenaggregat hat den Vorteil, dass die Mischeinrichtung mit der Steuereinrichtung zur temperaturabhängigen Drehzahlregelung des ersten Umwälzpumpenaggregates unabhängig realisiert werden kann und leicht in ein vorhandenes Heizungssystem, welches bereits ein Umwälzpumpenaggregat aufweist, integriert werden kann. Das ohnehin in dem Heizungssystem vorhandene Umwälzpumpenaggregat bildet dann das beschriebene zweite Umwälzpumpenaggregat.

In einer alternativen Ausführungsform können das erste und das zweite Umwälzpumpenaggregat eine gemeinsame Steuereinrichtung und/oder zwei miteinander kommunizierende Steuereinrichtungen aufweisen, welche derart ausgebildet sind, dass das erste und das zweite Umwälzpumpenaggregat in ihren Drehzahlen in Abhängigkeit des von dem zumindest einen Temperatursensor erfassten Temperaturwertes geregelt werden. Wenn zwei miteinander kommunizierende Steuereinrichtungen vorgesehen sind, so weisen diese geeignete Kommunikationsschnittstellen zum Datenaustausch auf. Die Kommunikationsschnittstellen können drahtgebunden oder auch drahtlos, beispielsweise als Wireless-LAN, Bluetooth oder andere geeignete drahtlose Schnittstellen ausgebildet sein. Durch Drehzahlregelung beider Umwälzpumpenaggregate in Abhängigkeit eines erfassten Temperaturwertes kann eine noch genauere Temperaturanpassung und/oder auch ein größerer Regelbereich realisiert werden.

Vorzugsweise sind das erste oder das zweite Umwälzpumpenaggregat derart angeordnet, dass es zusätzlich einen weiteren Heizkreis mit Heizmedium versorgt. Wenn das zweite Umwälzpumpenaggregat, wie vorangehend beispielhaft beschrieben, ein Umwälzpumpenaggregat ist, welches beispielsweise einem Heizkessel oder einer Heizungsanlage zugeordnet ist, so kann dieses Umwälzpumpenaggregat Heizkreise versorgen, welche mit höherer Vorlauftemperatur betrieben werden, während das beschriebene erste Umwälzpumpenaggregat der Mischeinrichtung dann bevorzugt einen oder mehrere Heizkreise mit geringerer Vorlauftemperatur, insbesondere Heizkreise einer Fußbodenheizung, mit Heizmedium versorgt.

Die Mischeinrichtung weist bevorzugt zwei Eingänge für die beiden Heizmediumströme auf, wobei an zumindest einem der beiden Eingänge und vorzugsweise an beiden Eingängen ein Einstellventil zum Einstellen des Durchflusses durch den jeweiligen Eingang angeordnet ist. Diese Einstellventile sind weiter bevorzugt manuell betätigbare Ventile. Diese Einstellventile ermöglichen die oben anhand des Verfahrens beschriebene Voreinstellung der Mischeinrichtung, sodass die hydraulische Leistung des Umwälzpumpenaggregates an den Anlagenbedarf angepasst werden kann und gleichzeitig unterschiedliche hydraulische Widerstände in den Strömungswegen für die beiden Heizmediumströme durch Voreinstellung ausgeglichen werden können, sodass dann durch die beschriebene Drehzahlregelung mit Hilfe der Steuereinrichtung ein optimaler Regelbereich erreicht wird.
Nachfolgend wird die Erfindung beispielhaft anhand der beigefügten Figuren beschrieben. In diesen zeigt:
- Fig. 1: einen hydraulischer Schaltplan einer Heizungsanlage gemäß dem Stand der Technik,
- Fig. 2: einen hydraulischen Schaltplan eines Heizungssystems gemäß einer ersten Ausführungsform der Erfindung,
- Fig. 3: einen hydraulischen Schaltplan eines Heizungssystems gemäß einer zweiten Ausführungsform der Erfindung,
- Fig. 4: einen hydraulischen Schaltplan eines Heizungssystems gemäß einer dritten Ausführungsform der Erfindung,
- Fig. 5: einen hydraulischen Schaltplan eines Heizungssystems entsprechend dem Ausführungsbeispiel gemäß Fig. 3 mit einem Doppellaufrad,
- Fig. 6: Explosionsansicht eines Umwälzpumpenaggregates mit einer Mischeinrichtung entsprechend dem Heizungssystem gemäß Fig. 2, 3 und 5,
- Fig. 7: eine Schnittansicht des Umwälzpumpenaggregates gemäß Fig. 6 entlang seiner Längsachse x,
- Fig. 8: eine Draufsicht auf die Rückseite des Umwälzpumpenaggregates gemäß Figuren 6 und 7,
- Fig. 9: eine teilweise geschnittene Ansicht der Rückseite des Umwälzpumpenaggregates gemäß Fig. 6 bis 8,
- Fig. 10: eine Explosionsansicht eines Umwälzpumpenaggregates mit einer Mischeinrichtung entsprechend dem Ausführungsbeispiel gemäß Fig. 4,
- Fig. 11: eine Schnittansicht des Umwälzpumpenaggregates gemäß Fig. 10 entlang seiner Längsachse X,
- Fig. 12: eine Draufsicht auf die Rückseite des Umwälzpumpenaggregates gemäß Fig. 9 und 10,
- Fig. 13: den Druckverlauf über der Drehzahl für das Ausführungsbeispiel eines Heizungssystems gemäß Fig. 2,
- Fig. 14: den Druckverlauf über der Drehzahl für ein Ausführungsbeispiel eines Heizungssystems gemäß Fig. 3 und
- Fig. 15: den Druckverlauf über der Drehzahl für ein Ausführungsbeispiel eines Heizungssystems gemäß Fig. 4.

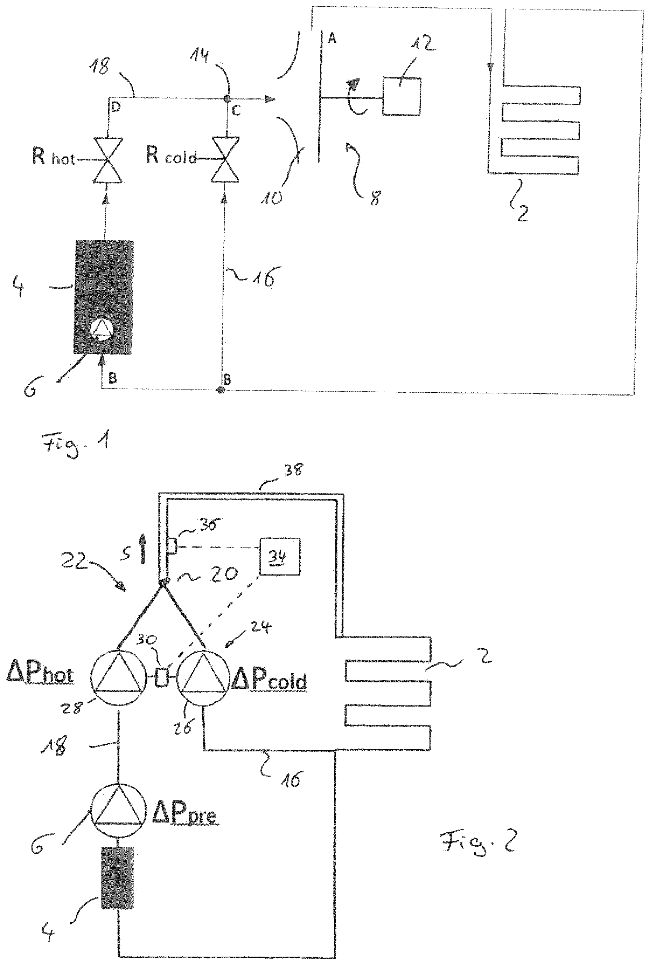

Fig. 1 zeigt schematisch einen herkömmlichen Heizkreis für eine Fußbodenheizung 2, d. h. einen Heizkreis gemäß dem Stand der Technik. Als Wärmequelle dient ein Heizkessel 4, beispielsweise ein Gasheizkessel mit einer integrierten Umwälzpumpe 6. Derartige Kombinationen sind beispielsweise als Kompaktheizungsanlagen am Markt bekannt. Für den Fußbodenheizungskreis 2 ist ein weiteres Umwälzpumpenaggregat 8 mit einem Laufrad 10 sowie einem elektrischen Antriebsmotor 12 vorgesehen. Da der Heizkessel 4 für die Fußbodenheizung 2 eine zu hohe Vorlauftemperatur bereitstellt, ist hier eine Mischeinrichtung vorgesehen, welche einen Mischpunkt 14 aufweist, der an der Saugseite des Laufrades 10 gelegen ist. An dem Mischpunkt 14 mündet eine Rücklaufleitung 16 des Fußbodenheizkreises 2. Ferner mündet an dem Misch- bzw. Mündungspunkt 14 eine Vorlaufleitung 18, über welche das von dem Heizkessel 4 erwärmte Wasser bzw. Heizmedium zugeführt und am Mischpunkt 14 durch den von dem Umwälzpumpenaggregat 6 erzeugten Druck eingespritzt wird. Zur Regulierung des Mischungsverhältnisses sind in diesem Ausführungsbeispiel zwei Durchflussregulierventile Rₕₒₜ und R_{cold} vorgesehen. Das Regulierventil Rₕₒₜ ist in der Vorlaufleitung 18 und das Regulierventil R_{cold} in der Rücklaufleitung 16 angeordnet. Die Ventile können beispielsweise von einer Steuereinrichtung über einen elektrischen Antrieb angesteuert werden. Bevorzugt können die Regulierventile Rₕₒₜ und R_{cold} so gekoppelt sein, dass zur Veränderung des Durchflusses stets eines der Ventile geöffnet und gleichzeitig das andere Ventil um dasselbe Maß geschlossen wird. Anstatt zweier Durchflussregulierventile R kann auch ein 3-Wege-Ventil verwendet werden, welches ein Ventilelement aufweist, das durch seine Bewegung gleichzeitig die Rücklaufleitung 16 verschließt und die Vorlaufleitung 18 öffnet oder umgekehrt. Das Umwälzpumpenaggregat 6 kann ferner einen hier nicht gezeigten weiteren Heizkreis versorgen, welcher direkt mit der vom Heizkessel erzeugten Vorlauftemperatur betrieben wird. Sowohl das Umwälzpumpenaggregat 6 als auch das Umwälzpumpenaggregat 8 können eine herkömmliche Druck- bzw. Durchflussregelung aufweisen. Bei dem bekannten System ist nachteilig, dass zur Einstellung Mischungsverhältnisses die Durchflussregulierventile R erforderlich sind und mit einem entsprechenden Antrieb, beispielsweise einem motorischen oder thermostatisch betätigten Antrieb versehen sein müssen. Die Durchflussregulierventile R werden so geregelt, dass stromabwärts des Mischpunktes 14 eine gewünschte Vorlauftemperatur für die Fußbodenheizung 2 erreicht wird. Ein weiterer Nachteil in diesem System ist, dass der von dem Umwälzpumpenaggregat 6 erzeugte Druck über das Durchflussregulierventil Rₕₒₜ abgebaut werden muss um den saugseitigen Druck des Laufrades 10 am Mischpunkt 14 zu erreichen. Es tritt somit in dem System ein Energieverlust auf, welcher mit der nachfolgend beschriebenen erfindungsgemäßen Lösung vermieden werden kann.

Bei den drei beispielhaft beschriebenen erfindungsgemäßen Lösungen, welche schematisch in Fig. 2 bis 4 dargestellt sind, wird das Mischungsverhältnis zum Erzielen einer gewünschten Vorlauftemperatur für die Fußbodenheizung 2 allein durch eine Drehzahlregelung eines Umwälzpumpenaggregates erreicht. Dieses weist zwei Strömungswege auf, welche sich gegenseitig hydraulisch so beeinflussen, dass durch Drehzahländerung der hydraulische Widerstand in zumindest einem der Strömungswege geändert werden kann, um das Mischungsverhältnis zu ändern, wie es nachfolgend beschrieben werden wird.

Fig. 2 zeigt ein erstes Ausführungsbeispiel der Erfindung. In diesem ist wiederum ein Heizkessel 4 zum Erwärmen eines flüssigen Heizmediums, d. h. eines flüssigen Wärmeträgers wie Wasser vorgesehen. An diesem Heizkessel 4 ist ferner ein Umwälzpumpenaggregat 6 angeordnet, welches auch in den Heizkessel 4 integriert sein könnte, wie es anhand von Fig. 1 erläutert wurde. Das Umwälzpumpenaggregat 6 fördert erwärmten Wärmeträger in einer Vorlaufleitung 18. Ferner ist eine Fußbodenheizung 2 bzw. ein Fußbodenheizkreis 2 vorgesehen, welcher einen Rücklauf aufweist, der zum einen mit der Eingangsseite des Heizkessels 4 verbunden ist und zum anderen über eine Rücklaufleitung 16 zu einem Mischpunkt 20 führt, an welchem auch die Vorlaufleitung 18 mündet. Der Misch- bzw. Mündungspunkt 20 ist Teil einer Mischeinrichtung 22 und ferner eines Umwälzpumpenaggregates 24. Die Mischeinrichtung 22 und das Umwälzpumpenaggregat 24 können eine integrierte Baueinheit bilden, sodass die Mischeinrichtung 22 Teil des Umwälzpumpenaggregates 24 ist bzw. das Umwälzpumpenaggregat 24 Teil der Mischeinrichtung 22 ist. Insbesondere kann der Mischpunkt 20, wie nachfolgend beschrieben werden wird, direkt im Pumpengehäuse oder in einem Laufrad des Umwälzpumpenaggregates 24 liegen.

In dem Ausführungsbeispiel gemäß Fig. 2 ist das Umwälzpumpenaggregat 24 als eine Doppelpumpe mit zwei Laufrädern 26 und 28 ausgebildet. Die Laufräder 26 und 28 werden über einen gemeinsamen Antriebsmotor 30 angetrieben. Die Laufräder 26 und 28 können als separate Laufräder oder als integriertes Laufrad mit zwei Schaufelanordnungen bzw. Strömungswegen ausgebildet sein. Das erste Laufrad 26 bildet einen ersten Strömungsweg und liegt in einer ersten Strömungsverbindung in der Mischeinrichtung von der Rücklaufleitung 16 zu dem Mischpunkt 20. Das zweite Laufrad 28 bildet einen zweiten Strömungsweg und liegt in einer zweiten Strömungsverbindung zwischen der Vorlaufleitung 18 und dem Mischpunkt 20. Der Mischpunkt 20 liegt somit an der Druckseite der beiden Laufräder 26 und 28, d. h. erfindungsgemäß werden die beiden Heizmediumströme nach der Druckerhöhung miteinander gemischt.

Der Antriebsmotor 30 wird von einer Steuereinrichtung 34 gesteuert bzw. geregelt, welche zur Drehzahlregelung bzw. Drehzahlsteuerung des Antriebsmotors 30 dient und so ausgebildet ist, dass sie die Drehzahl des Antriebsmotors 30 verändern kann. Dazu weist die Steuereinrichtung 34 einen Drehzahlsteller insbesondere unter Verwendung eines Frequenzumrichters auf. Die Steuereinrichtung 34 kann direkt in den Antriebsmotor 30 integriert sein oder in einem Elektronikgehäuse direkt an dem Antriebsmotor und insbesondere an dessen Motorgehäuse angeordnet sein. Die Steuereinrichtung 34 ist ferner mit einem Temperatursensor 36 verbunden bzw. kommuniziert mit einem Temperatursensor 36. Der Temperatursensor 36 ist stromabwärts des Mischpunktes 20 an oder in der Vorlaufleitung 38 gelegen, welche den Mischpunkt 20 mit dem Fußbodenheizkreis 2 verbindet. Dabei kann der Temperatursensor 36 in die Mischeinrichtung 22 bzw. das Umwälzpumpenaggregat 24 integriert sein. Die Verbindung des Temperatursensors 36 mit der Steuereinrichtung 34 kann in beliebiger geeigneter Weise vorgesehen sein, beispielsweise drahtgebunden oder auch drahtlos. Eine drahtlose Verbindung kann beispielsweise über eine Funkverbindung wie Bluetooth oder W-LAN realisiert sein.

Der Temperatursensor 36 überträgt einen Temperaturwert des Heizmediums stromabwärts des Mischpunktes 20 an die Steuereinrichtung 34, sodass diese eine Temperaturregelung durchführen kann. Erfindungsgemäß wird der Antriebsmotor 30 und damit das Umwälzpumpenaggregat 34 nicht druck- oder durchflussabhängig, sondern temperaturabhängig geregelt. D. h. die Steuereinrichtung 34 passt die Drehzahl des Antriebsmotors 30 so an, dass eine gewünschte Temperatur des Heizmediums stromabwärts des Mischpunktes 20 erreicht wird. Die gewünschte Temperatur wird durch einen Temperatur-Soll-Wert vorgegeben, welcher fest vorgegeben sein kann, manuell einstellbar sein kann oder auch außentemperaturabhängig durch eine Heizkurve vorgegeben sein kann, welche in der Steuereinrichtung 34 oder einer übergeordneten Steuerung hinterlegt ist. Die Steuereinrichtung 34 variiert die Drehzahl des Antriebsmotors 30, wodurch sich, wie nachfolgend beschrieben wird, das Mischungsverhältnis der Heizmediumströme, welche an dem Mischpunkt 20 gemischt werden, ändert, sodass sich die Temperatur stromabwärts des Mischpunktes 20 ändert. Diese Temperatur wird von dem Temperatursensor 36 erfasst, sodass die Steuereinrichtung 34 durch Drehzahlvariation des Antriebsmotors 30 eine Temperaturregelung vornehmen kann, um den Temperaturwert stromabwärts des Mischpunktes 20 dem Temperatur-Soll-Wert anzunähern.

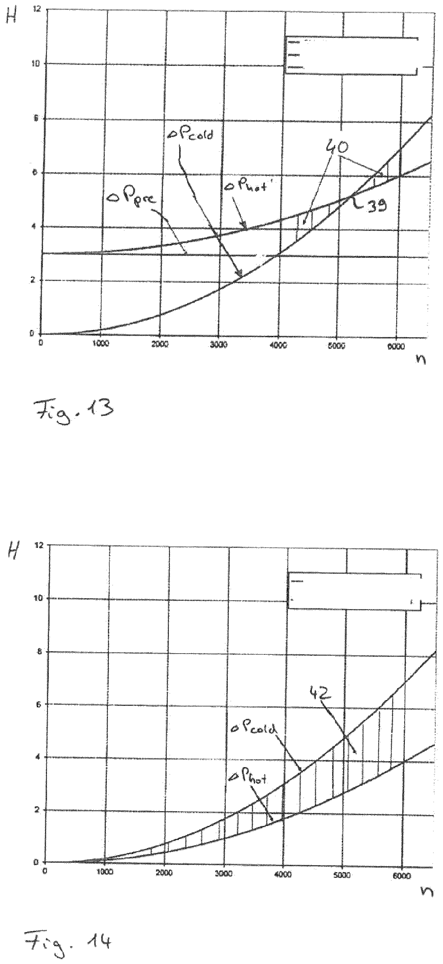

Die Variation des Mischungsverhältnisses an dem Mischpunkt 20 über die Drehzahländerung wird näher anhand von Fig. 13 erläutert. In Fig. 13 ist die Förderhöhe H, d. h. der Druck über der Drehzahl n des Antriebsmotors 30 aufgetragen. Im in Fig. 2 genannten Beispiel gibt es drei Differenzdruckwerte Δ Pₚᵣₑ, ΔPₕₒₜ und ΔP_{cold}. Der Differenzdruck ΔPₚᵣₑ wird von dem Umwälzpumpenaggregat 6 erzeugt und ist von der Mischeinrichtung 22 in diesem Fall nicht beeinflussbar, sodass er in Fig. 13 als konstanter, d. h. von der Drehzahl des Antriebsmotors 30 unabhängiger Vordruck dargestellt ist. Das Laufrad 26 des Umwälzpumpenaggregates 24 erzeugt für den Rücklauf der Fußbodenheizung 2 einen Differenzdruck ΔP_{cold} und das Laufrad 28 erzeugt für den Vorlauf aus der Vorlaufleitung 18 einen Differenzdruck ΔPₕₒₜ. Wie in Fig. 13 zu erkennen ist, sind die Laufräder 26 und 28 unterschiedlich ausgebildet, sodass sie unterschiedliche Druckverläufe, d. h. unterschiedliche drehzahlabhängige Druckverläufe aufweisen. Der Druckverlauf für das Laufrad 28 ist weniger steil als der Druckverlauf des Laufrades 26. Dies kann beispielsweise dadurch erreicht werden, dass das Laufrad 26 einen größeren Außendurchmesser hat. Für das erwärmte Heizmedium, welches durch die Vorlaufleitung 18 zugeführt wird, addieren sich darüber hinaus die Differenzdrücke ΔPₚᵣₑ und ΔPₕₒₜ, sodass die Druckverlaufskurve ΔPₕₒₜ um einen konstanten Wert in dem Diagramm nach oben verschoben ist. Dadurch wird erreicht, dass sich die Druckverlaufskurven ΔPₕₒₜ und ΔP_{cold} in einem Punkt 39 schneiden. Oberhalb und unterhalb des Schnittpunktes dieser Kurven ergeben sich Mischbereiche 40 für die gemischte Flüssigkeit. Bei einer Drehzahl n unterhalb des Schnittpunktes 39 der beiden Druckverlaufskurven ist der Ausgangsdruck des Laufrades 28 höher als derjenige des Laufrades 26, sodass der Ausgangsdruck des Laufrades 28 in dem Strömungsweg durch das Laufrad 26 an dem Mischpunkt 20 als Gegendruck und hydraulischer Widerstand wirkt und in diesem Betriebszustand der Durchfluss durch den ersten Strömungsweg durch das Laufrad 26 reduziert wird und mehr erwärmtes Heizmedium zugemischt wird, um eine höhere Temperatur im Vorlauf 38 zu dem Fußbodenheizkreis 2 zu erreichen. Wenn die Drehzahl erhöht wird, ist oberhalb des Schnittpunktes 39 der beiden Druckverlaufskurven der Ausgangsdruck des Laufrades 26 höher als derjenige des Laufrades 28, sodass in dem zweiten Strömungsweg durch das Laufrad 28 ein hydraulischer Widerstand in Form eines Gegendruckes an dem Mischpunkt 20 erzeugt wird und der Durchfluss durch den zweiten Strömungsweg reduziert wird, wodurch weniger erwärmtes Heizmedium am Mischpunkt 20 zugeführt wird und die Temperatur ausgangsseitig des Mischpunktes 20 reduziert werden kann.

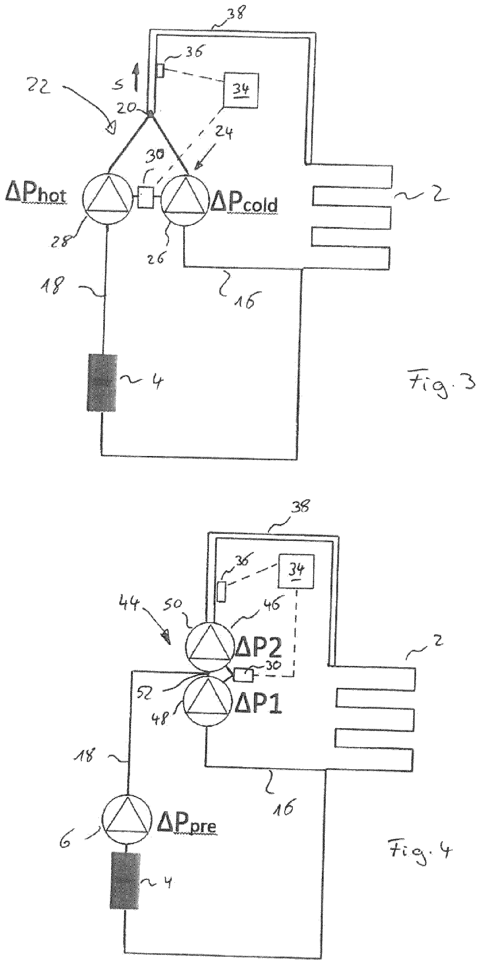

Fig. 3 zeigt eine weitere Variante einer erfindungsgemäßen Mischeinrichtung bzw. eines erfindungsgemäßen Heizungssystems, welche sich von dem Heizungssystem gemäß Fig. 2 dadurch unterscheiden, dass kein Umwälzpumpenaggregat 6 im Vorlauf 18 vorgesehen ist. D. h. das erwärmte Heizmedium wird über die Vorlaufleitung 18 ohne Vordruck dem Umwälzpumpenaggregat 24 zugeführt. Dadurch ergeben sich die in Fig. 14 gezeigten Druckverlaufskurven. In Fig. 14 ist wiederum die Förderhöhe H, d. h. der Druck über der Drehzahl n des Antriebsmotors 30 aufgetragen. Die Druckverlaufskurven ΔP_{cold} und ΔPₕₒₜ entsprechen den Druckverlaufskurven, welche in Fig. 13 gezeigt sind. Es fehlt lediglich der konstante Vordruck ΔPₚᵣₑ, sodass die Druckverlaufskurve ΔPₕₒₜ nicht im Diagramm nach oben verschoben ist, sondern wie die Druckverlaufskurve ΔP_{cold} im Nullpunkt beginnt. Beide Kurven weisen jedoch eine unterschiedliche Steigung auf, was wiederum, wie oben beschrieben durch unterschiedliche Laufraddurchmesser der Laufräder 26 und 28 erreicht wird. Dadurch, dass der Differenzdruck an den Laufrädern 26 und 28 sich bei Drehzahländerung unterschiedlich verändert, verändern sich die hydraulischen Widerstände, wodurch sich ein Mischbereich 42 zwischen den beiden Druckverlaufskurven ergibt mit einem resultierenden Differenzdruck. Der höhere Ausgangsdruck ΔP_{cold} des Laufrades 26 wirkt als hydraulischer Widerstand in dem zweiten Strömungsweg durch das Laufrad 28 an dem Mischpunkt 20. Der hydraulische Widerstand ergibt sich aus der Druckdifferenz zwischen den Ausgangsdrücken der Laufräder 26 und 28 am Mischpunkt 20. Wie in Fig. 14 erkennbar, ist diese Druckdifferenz zwischen den Druckverlaufskurven ΔP_{cold} und ΔPₕₒₜ (der Mischbereich 42) drehzahlabhängig. D. h. auch so kann der hydraulische Widerstand, welcher im Strömungsweg durch das Laufrad 28 wirkt, durch Drehzahländerung variiert werden, sodass der Durchfluss durch das Laufrad 28 und somit der Durchfluss an erwärmten Heizmedium verändert werden kann. Auch so ist eine Änderung der Temperatur ausgangsseitig des Mischpunktes 20 und damit eine Temperaturregelung durch Drehzahländerung der Drehzahl n des Antriebsmotors 30 möglich.

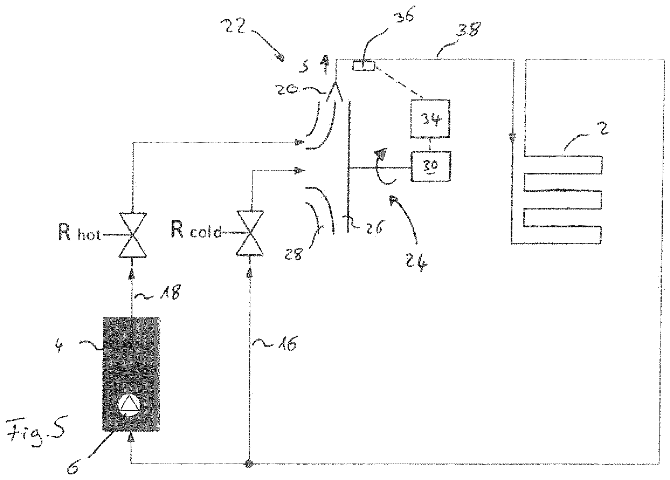

Fig. 5 zeigt ein Ausführungsbeispiel, welches eine Variante des in Fig. 2 gezeigten Ausführungsbeispiels darstellt. Es sind die beiden Laufräder 26 und 28 in Form eines Doppel-Laufrades ausgebildet. D. h. das Laufrad 26 wird von einem ersten Schaufelkranz und das Laufrad 28 von einem zweiten Schaufelkranz desselben Laufrades gebildet. Die Variation des Mischungsverhältnisses am Mischpunkt 20 über Änderung der Drehzahl n des Antriebsmotors 30 erfolgt in derselben Weise wie anhand von Fig. 3 und 13 beschrieben. In diesem Ausführungsbeispiel sind zusätzlich stromaufwärts der Laufräder 26 und 28 in der Vorlaufleitung 18 ein Durchflussregulierventil Rₕₒₜ sowie in der Rücklaufleitung 16 ein Durchflussregulierventil R_{cold} vorgesehen. Bei diesen handelt es sich um manuell einstellbare Ventile, mit welchen eine Voreinstellung vorgenommen werden kann, bevor die beschriebene Drehzahlregelung ausgeführt wird. Die Voreinstellung erfolgt vorzugsweise in der Weise, dass zunächst die Drehzahl des Antriebsmotors 30 so eingestellt wird, dass durch den Fußbodenkreis 2 ein ausreichender Durchfluss erreicht wird. D. h. es wird die Drehzahl der Laufräder 26 und 28 zunächst so eingestellt, dass ein auf die Anlage, d. h. den hydraulischen Widerstand der Anlage abgestimmter Differenzdruck erzeugt wird. Anschließend werden die manuellen Durchflussregulierventile Rₕₒₜ und R_{cold} so eingestellt, dass bei der gegebenen Drehzahl an dem Temperatursensor 36 ein gewünschter Temperatur-Soll-Wert erreicht wird. Dieser Temperatur-Soll-Wert kann beispielsweise ein Temperatur-Soll-Wert sein, welcher bei der aktuellen Außentemperatur von einer Heizkurve vorgegeben wird. Durch die manuelle Voreinstellung wird ein Ausgleich zwischen unterschiedlichen hydraulischen Widerständen in der Vorlaufleitung 18 und der Rücklaufleitung 16 erreicht. Nach dieser Voreinstellung kann dann die Temperaturregelung durch Drehzahlregelung mithilfe der Steuereinrichtung 34 durchgeführt werden, wobei lediglich geringe Drehzahländerungen zur Temperaturanpassung erforderlich sind, wie sich aus dem Diagramm in Fig. 13 ergibt. Derartige Ventile zur Voreinstellung können auch bei den anderen beschriebenen Ausführungsbeispielen eingesetzt werden.

Fig. 4 zeigte eine dritte Variante eines Heizungssystems mit einer erfindungsgemäßen Mischeinrichtung. Auch in diesem Heizungssystem ist ein Heizkessel 4 mit einem stromabwärts angeordneten Umwälzpumpenaggregat 6 vorgesehen. Ferner ist eine zu versorgende Fußbodenheizung 2 bzw. ein Fußbodenheizkreis 2 vorgesehen. Auch hier ist eine Mischeinrichtung 44 vorhanden, in welcher ein Heizmediumstrom aus einem Vorlauf 18, welcher sich ausgehend von dem Heizkessel 4 erstreckt mit einem Heizmediumstrom aus einer Rücklaufleitung 16 aus dem Rücklauf der Fußbodenheizung 2 gemischt wird. In diesem Ausführungsbeispiel weist die Mischeinrichtung 44 wiederum ein Umwälzpumpenaggregat 46 mit einem elektrischen Antriebsmotor 30 auf. Auch dieser Antriebsmotor 30 wird in seiner Drehzahl durch eine Steuereinrichtung 34 geregelt, welche direkt in den Antriebsmotor 30 integriert oder in einem Elektronikgehäuse unmittelbar an dem Antriebsmotor 30 angeordnet sein kann. Die Steuereinrichtung 34 ist wie bei den vorangehenden Ausführungsbeispielen mit einem Temperatursensor 36 kommunikationsverbunden, welcher an einer Vorlaufleitung 38 zu dem Fußbodenkreis 2 hin gelegen ist, sodass er die Vorlauftemperatur des Heizmediums erfasst, welche dem Fußbodenheizkreis 2 zugeführt wird. So kann auch bei dem Umwälzpumpenaggregat 36 in der oben beschriebenen Weise eine temperaturabhängige Drehzahlregelung durchgeführt werden.

Von den vorangehend beschriebenen Ausführungsbeispielen unterscheidet sich das Ausführungsbeispiel gemäß Fig. 4 darin, dass das Umwälzpumpenaggregat zwar keine zwei parallel geschaltete Laufräder aufweist, sondern in Reihe geschaltete Laufradteile 48 und 50. Die Laufradteile 48 und 50 können als zwei separate drehfest miteinander verbundene Laufräder ausgebildet sein, sodass diese über den gemeinsamen Antriebsmotor 30 drehend angetrieben werden. Besonders bevorzugt sind die Laufradteile 48, 50 jedoch als ein Laufrad ausgebildet, welches zwischen einer ersten zentralen Eintrittsöffnung und der Austrittsöffnung, wie unten näher beschrieben wird, zumindest eine zweite Eintrittsöffnung in einem radialen Mittelbereich aufweist. Diese zweite Eintrittsöffnung bildet bei diesem Ausführungsbeispiel den Misch- bzw. Mündungspunkt 52, an welchem die beiden Flüssigkeitsströmungen bzw. Heizmediumströme aus der Rücklaufleitung 16 und der Vorlaufleitung 18 gemischt werden. Über den Laufradteil 48 erfährt der Heizmediumstrom aus der Rücklaufleitung 16 eine erste Druckerhöhung ΔP1 stromaufwärts des Mischpunktes 52. Der Heizmediumstrom aus der Vorlaufleitung 18 erfährt eine Druckerhöhung ΔPₚᵣₑ durch das Umwälzpumpenaggregat 6. Mit diesem Vordruck wird der Heizmediumstrom an dem Mündungspunkt 52 in den Heizmediumstrom, welcher den Laufradteil 48 verlässt, eingespritzt. Der Mündungspunkt 52 und der zweite Laufradteil 50 bilden einen zweiten Strömungsweg, durch welchen der Heizmediumstrom aus der Vorlaufleitung 18 und im weiteren Verlauf stromabwärts des Mündungspunktes 52 auch der Heizmediumstrom aus der Rücklaufleitung 16, welcher zuvor in einem ersten Strömungsweg in dem Laufradteil 48 eine Druckerhöhung erfahren hat, fließen. In dem Laufradteil 50 erfährt der gemischte Heizmediumstrom eine weitere Druckerhöhung ΔP2.

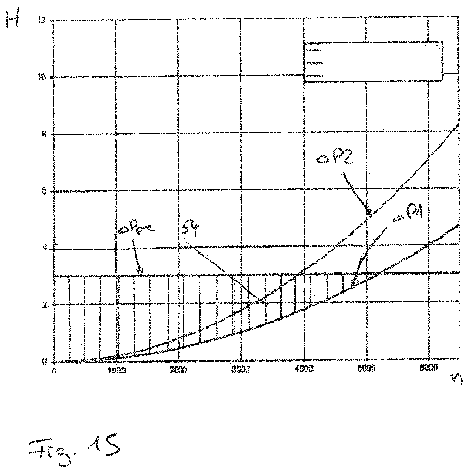

Auch bei dieser Konfiguration kann durch Drehzahländerung das Mischungsverhältnis zwischen dem Heizmediumstrom aus der Rücklaufleitung 16 und dem Heizmediumstrom aus der Vorlaufleitung 18 geändert werden, wie anhand von Fig. 15 näher beschrieben wird. In Fig. 15 sind wiederum die Druckverläufe in Form der Förderhöhe H über der Drehzahl n des Antriebsmotors 30 aufgetragen. In dem Diagramm in Fig. 15 ist der konstante Vordruck ΔPₚᵣₑ, welcher von dem Umwälzpumpenaggregat 6 erzeugt wird als horizontale Linie zu erkennen. Ferner sind die beiden drehzahlabhängigen Druckverläufe ΔP1 und ΔP2 gezeigt. Dabei hat der Druckverlauf ΔP2 einen steileren Verlauf als der Druckverlauf ΔP1, d. h. der Druck ΔP2 steigt mit Erhöhung der Drehzahl stärker an als der Druck ΔP1. Zwischen dem Druckverlauf ΔP1 und dem Vordruck ΔPₚᵣₑ befindet sich ein Mischbereich 54 in dem unterschiedliche Mischungsverhältnisse realisiert werden können. Mit steigenden Druck ΔP1, welchen der Heizmediumstrom aus der Rücklaufleitung 16 in dem Laufradteil 48 erfährt, steigt der hydraulische Widerstand in dem zweiten Strömungsweg zu dem Laufradteil 50 am Mischpunkt 52. Es bildet sich ein Gegendruck an dem Mischpunkt 52, welcher als hydraulischer Widerstand für den Heizmediumstrom dient, welcher aus der Vorlaufleitung 18 in den Mischpunkt 52 eintritt. Je höher der Gegendruck an dem Mischpunkt 52 wird, umso geringer wird der Durchfluss durch diesen zweiten Strömungsweg durch den Mündungspunkt 52, d.h. umso kleiner wird der Heizmediumstrom, welcher aus der Vorlaufleitung 18 in den Mischpunkt 52 und damit den zweiten Strömungsweg eintritt. Mit Übersteigen des Vordruckes ΔPₚᵣₑ durch den Druck ΔP1 wird der Warmwasserstrom, d. h. der Heizmediumstrom aus der Vorlaufleitung 18 vollständig abgeschaltet. So kann durch Drehzahländerung das Mischungsverhältnis verändert werden. In dem zweiten Laufradteil 50 erfährt der gemischte Heizmediumstrom dann die Druckerhöhung auf den Druck ΔP2.

Diese Anordnung hat den Vorteil, dass der Druck ΔPₚᵣₑ, welcher von dem Umwälzpumpenaggregat 6 erzeugt wird, nicht abgebaut werden muss, da die Mischung der beiden Heizmediumströme auf einem höheren Druckniveau, nämlich auf dem Niveau des Druckes ΔP1 stattfindet. Dadurch werden Energieverluste in der Mischeinrichtung 44 verringert.

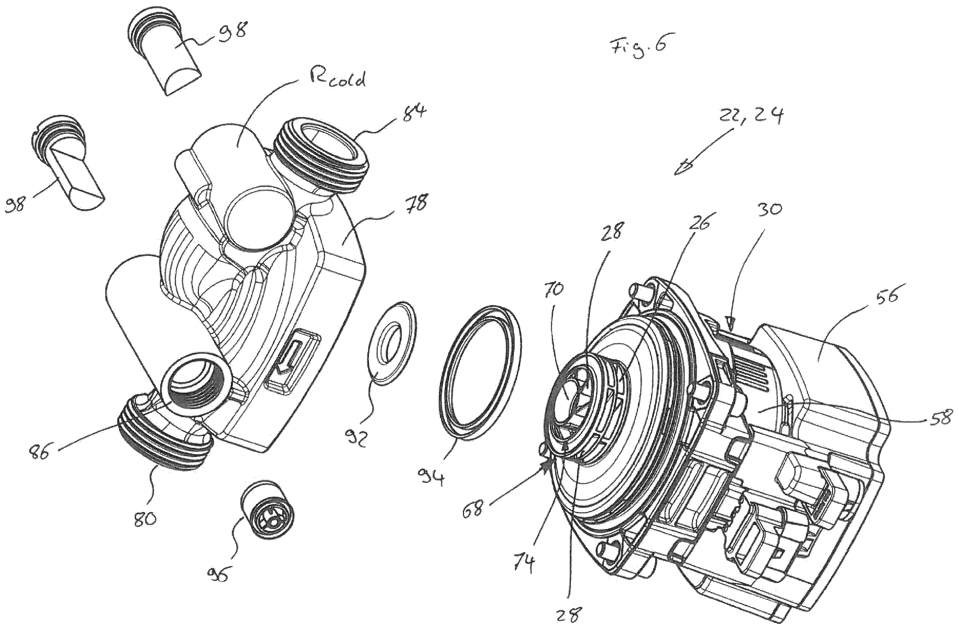

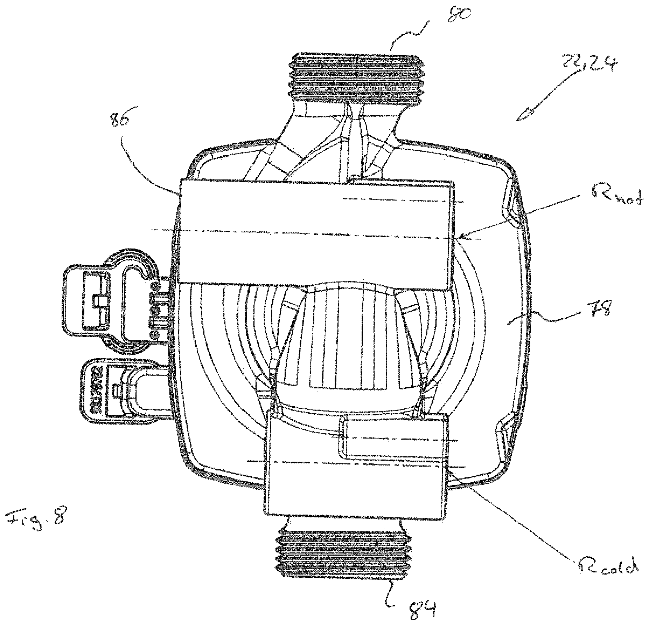

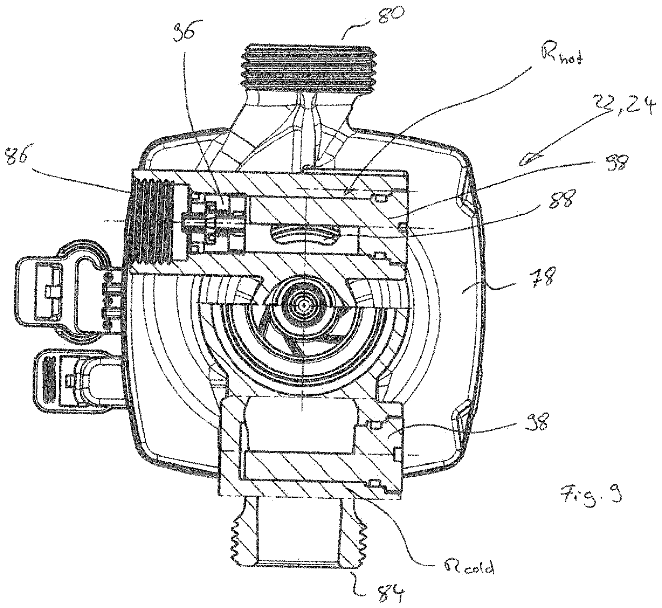

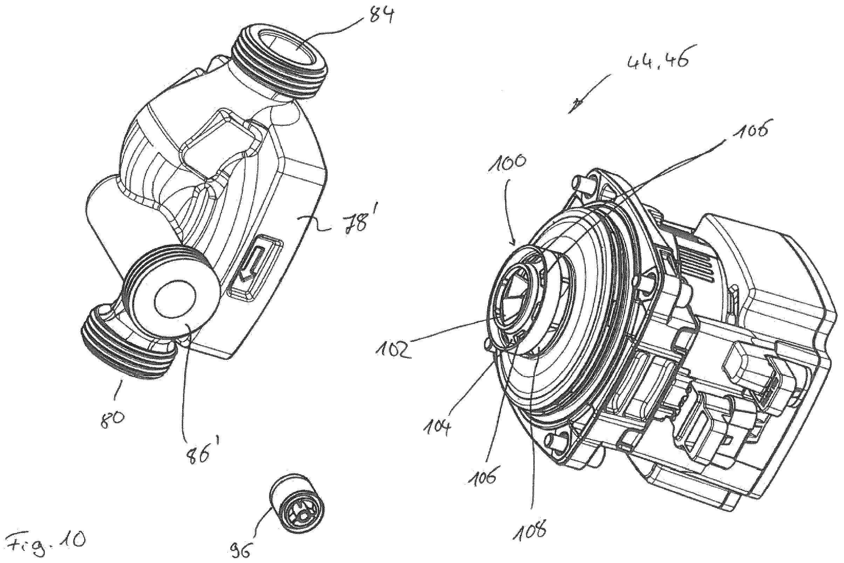

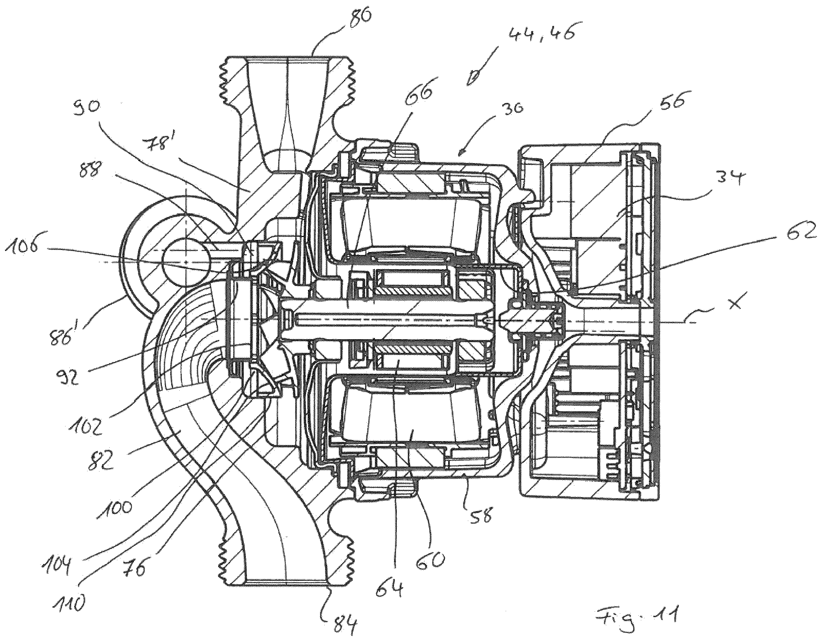

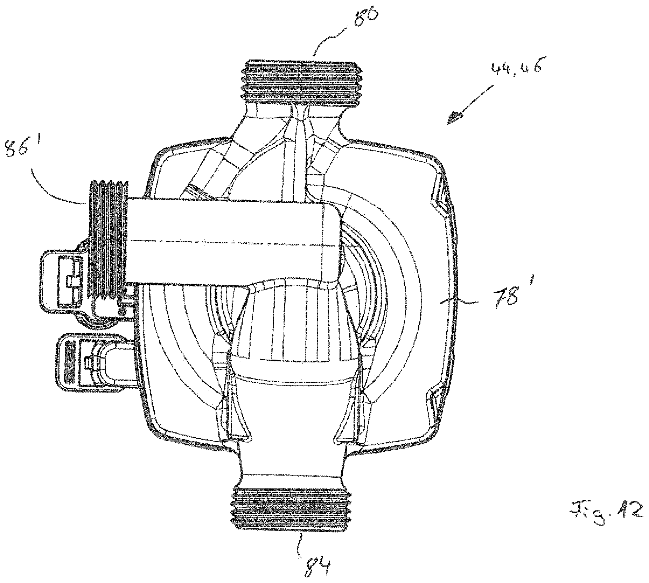

Nachfolgend wird anhand der Figuren 6 bis 12 der konstruktive Aufbau der Mischeinrichtungen 22 und 44 näher beschrieben. Dabei zeigen die Figuren 6 bis 9 eine Mischeinrichtung, welche als Mischeinrichtung 22 in den Ausführungsbeispielen gemäß Figuren 2, 3 und 5 zum Einsatz kommt. Die Figuren 10 bis 12 zeigen eine Mischeinrichtung 44, wie sie bei dem Ausführungsbeispiel gemäß Fig. 4 zum Einsatz kommt.

Das Ausführungsbeispiel gemäß Fig. 6 bis 9 zeigt eine integrierte Umwälzpumpen-Misch-Einrichtung, d. h. ein Umwälzpumpenaggregat mit integrierter Mischeinrichtung bzw. eine Mischeinrichtung mit integrierten Umwälzpumpenaggregat. Das Umwälzpumpenaggregat weist in bekannter Weise einen elektrischen Antriebsmotor 30 auf, an dem ein Elektronikgehäuse bzw. Klemmenkasten 56 angesetzt ist. In dem Elektronikgehäuse ist in diesem Ausführungsbeispiel die Steuereinrichtung 34 angeordnet. Der elektrische Antriebsmotor weist ein Stator- bzw. Motorgehäuse 58 auf, in dessen Inneren der Stator 60 des Antriebsmotors 30 angeordnet ist. Der Stator 60 umgibt einen Spalttopf bzw. ein Spaltrohr 62, welches den Statorraum von einem zentral gelegenen Rotorraum trennt. In dem Rotorraum ist der Rotor 64 angeordnet, welcher beispielsweise als Permanentmagnetrotor ausgebildet sein kann. Der Rotor 64 ist über eine Rotorwelle 66 mit dem Laufrad 68 verbunden, sodass der Rotor 64 bei seiner Rotation um die Drehachse X das Laufrad 68 drehend antreibt.

Das Laufrad 68 ist in diesem Ausführungsbeispiel als Doppellaufrad ausgebildet und vereint die Laufräder 26 und 28, wie sie anhand der Fig. 2 und 5 beschrieben wurde. Das Laufrad 68 weist einen zentralen Saugmund 70 auf, welcher in eine erste Schaufelanordnung bzw. einen ersten Schaufelkranz mündet, welcher das Laufrad 26 bildet. So wird durch den Saugmund 70 und das Laufrad 26 ein erster Strömungsweg durch das Laufrad 68 definiert. Das Laufrad 26 ist geschlossen ausgebildet und weist eine vordere Deckscheibe 72 auf, welche in einen den Saugmund 70 begrenzenden Kragen übergeht. Auf der vorderen Deckscheibe 72 ist ein zweiter Schaufelkranz angeordnet bzw. ausgebildet, welcher das zweite Laufrad 28 bildet. Das zweite Laufrad 28 weist eintrittsseitig einen ringförmigen Saugmund 74 auf, welcher den Saugmund 70 ringförmig umgibt. Der zweite Saugmund 74 bildet eine zweite Eintrittsöffnung des Laufrades 68. Das Laufrad 28 bildet ausgehend von dem zweiten Saugmund 74 einen zweiten Strömungsweg durch das Laufrad 68. Sowohl das Laufrad 26 als auch das Laufrad 28 weisen umfangsseitig Austrittsöffnungen auf, welche in einen Druckraum 76 eines Pumpengehäuses 78 münden.

Das Pumpengehäuse 78 ist in üblicher Weise mit dem Motorgehäuse 58 verbunden. Der Druckraum 76 im Inneren des Pumpengehäuses 78 mündet in einen Druckstutzen 80, an welchen sich in den Ausführungsbeispielen gemäß Fig. 2, 3 und 5 die Vorlaufleitung 38 zu dem Fußbodenheizkreis 2 anschließen würde. Da beide Laufräder 26 und 28 in den Druckraum 76 münden, liegt der anhand von Fig. 2, 3 und 5 beschriebene Mischpunkt 20 austrittsseitig des Laufrades 68 in dem Druckraum 76 des Pumpengehäuses 78.

Der erste Saugmund 70 des Laufrades 68 steht in dem Pumpengehäuse 78 mit einer ersten Saugleitung 82, welche an einem ersten Saugstutzen 84 beginnt, in Verbindung. Dieser erste Saugstutzen 84 liegt axial fluchtend zu dem Druckstutzen 80 entlang einer Einbauachse, die sich normal zur Drehachse X erstreckt. An dem Saugstutzen 84 ist in den Ausführungsbeispielen gemäß Fig. 2, 3 und 5 die Rücklaufleitung 16 angeschlossen. In diesem Ausführungsbeispiel ist in der Saugleitung 82 darüber hinaus ein Durchflussregulierventil R_{cold} angeordnet, wie es in Fig. 5 gezeigt ist.

Von dem Saugstutzen 84, welcher einen ersten Eingang bildet, ist über die Saugleitung 82, den Saugmund 70, das erste Laufrad 26, den Druckraum 76 und den Druckstutzen 80 eine erste Strömungsverbindung durch das Pumpengehäuse 78 definiert. Das Pumpengehäuse 78 weist darüber hinaus einen zweiten Saugstutzen 86 auf, welcher einen zweiten Eingang bildet. Der zweite Saugstutzen ist im Inneren des Pumpengehäuses 78 über einen Verbindungskanal 88 mit einem Ringraum 90 an der Saugseite des Laufrades 68 verbunden. Der Ringraum 90 umgibt ein Ringelement 92 außenumfänglich. Das Ringelement 92 ist in den Saugraum des Pumpengehäuses 78 eingesetzt und ist mit seinem ringförmigen Kragen mit dem den Saugmund 70 umgebenden Kragen in Eingriff, sodass eine gedichtete Strömungsverbindung von dem Saugkanal 82 in den Saugmund 70 hinein geschaffen wird. Außenumfänglich ist das Ringelement 92 von dem Ringraum 90 umgeben, sodass das Ringelement 92 den Strömungsweg zu dem Saugmund 70 von dem Strömungsweg zu dem zweiten Saugmund 74 trennt. In das Pumpengehäuse eingesetzt ist ferner ein ringförmiges Dichtelement 94, welches am Innenumfang des Pumpengehäuses 78 anliegt und mit dem Außenumfang des Laufrades 68 dichtend in Anlage kommt. Dabei ist das Dichtelement 94 im Außenumfangsbereich des zweiten Saugmundes 74 mit dem Laufrad 68 in dichtender Anlage, sodass es den Saugbereich eingangsseitig des Saugmundes 74 von dem Druckraum 76 im Pumpengehäuse trennt.

In dem Strömungsweg von dem zweiten Saugstutzen 86 zu dem Verbindungskanal 88 ist darüber hinaus ein Rückschlagventil 96 angeordnet, welches ein Rückströmen von Flüssigkeit in die Vorlaufleitung 18 verhindert. An den zweiten Saugstutzen 86 wird die Vorlaufleitung 18, wie sie in den Fig. 2, 3 und 5 gezeigt ist, angeschlossen.

Mit dem gezeigten Umwälzpumpenaggregat 24 mit der integrierten Mischeinrichtung 22 kann durch Drehzahländerung des Antriebsmotors 30 eine Temperierung des Heizmediums, welches dem Fußbodenheizkreis 2 zugeführt wird, erreicht werden, wie es anhand der Fig. 2, 3 und 5 sowie 13 und 14 beschrieben wurde.

Über die Durchflussregulierventile R_{cold} und Rₕₒₜ, kann, wie anhand von Fig. 5 beschrieben eine Voreinstellung vorgenommen werden. In diesem Ausführungsbeispiel sind die Durchflussregulierventile R_{cold} und Rₕₒₜ als drehbare Ventilelemente 98 ausgebildet, welche jeweils in einen zylindrischen Aufnahmeraum eingesetzt sind. Durch Drehung gelangen die Ventilelemente 98 unterschiedlich weit in die Saugleitung 82 oder überdecken den Verbindungskanal 88, sodass der freie Strömungsquerschnitt in dem ersten oder zweiten Strömungsweg durch Drehung des entsprechenden Ventilelementes 98 verändert werden kann.

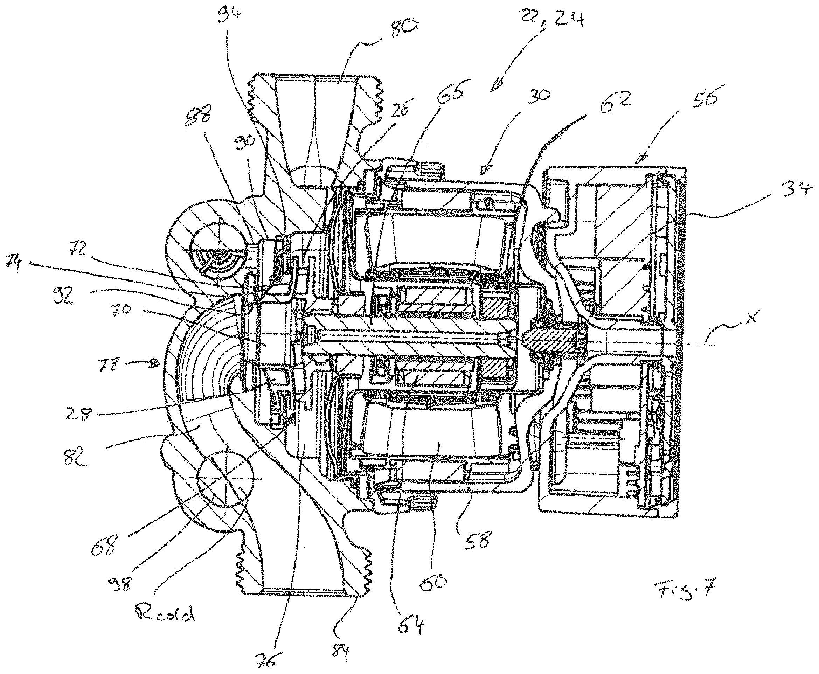

Die Fig. 10 bis 12 zeigen ein Ausführungsbeispiel des Umwälzpumpenaggregates 46 mit der Mischeinrichtung 44, wie es anhand von Fig. 4 und 15 beschrieben wurde. Die Mischeinrichtung 44 und das Umwälzpumpenaggregat 46 stellen auch hier eine integrierte Baueinheit dar. Der Antriebsmotor 30 mit dem angesetzten Elektronikgehäuse 56 entspricht in einem Aufbau dem Antriebsmotor 30, wie er anhand der Fig. 7 bis 9 beschrieben wurde. Auch das Pumpengehäuse 78' entspricht in seinem Aufbau im Wesentlichen dem vorangehend beschriebenen Pumpengehäuse 78. Ein erster Unterschied besteht darin, dass das Pumpengehäuse 78' keine Durchflussregulierventile Rₕₒₜ und R_{cold} aufweist, wobei zu verstehen ist, dass auch in diesem zweiten Ausführungsbeispiel derartige Durchflussregulierventile R vorgesehen sein könnten, wie sie vorangehend beschrieben wurden. Ein zweiter Unterschied besteht darin, dass der zweite Saugstutzen 86' in diesem Ausführungsbeispiel ein Außengewinde aufweist. Es ist jedoch zu verstehen, dass auch der Saugstutzen 86 gemäß dem vorangehenden Ausführungsbeispiel entsprechend ausgestaltet werden könnte oder der Saugstutzten 86' ebenfalls ein Innengewinde aufweisen könnte.

In dem zweiten Ausführungsbeispiel ist ein Laufrad 100 mit der Rotorwelle 66 verbunden. Dieses Laufrad 100 weist einen zentralen Saugmund 102 auf, dessen Umfangsrand mit dem Ringelement 92 in dichtenden Eingriff ist, sodass eine Strömungsverbindung von den ersten Saugstutzen 84 in das Laufrad 100 hineingeschaffen wird. Das Laufrad 100 weist lediglich einen Schaufelkranz auf, welcher einen ersten Strömungsweg ausgehend von dem Saugmund 102, welcher eine erste Eintrittsöffnung bildet, zum Außenumfang des Laufrades 100 definiert. Dieser erste Strömungsweg mündet in den Druckraum 76, welcher mit dem Druckstutzen 80 verbunden ist. Das Ringelement 92 umgebend ist wiederum ein Ringraum 90 vorhanden, in welchen der Verbindungskanal 88 von dem zweiten Saugstutzen 86 mündet. Das Laufrad 100 weist eine vordere Deckscheibe 104 auf. In dieser sind Öffnungen 106 ausgebildet, welche zweite Eintrittsöffnungen bilden. Diese Öffnungen 106 münden in die Strömungskanäle 108 zwischen den Laufradschaufeln. Dabei münden die Öffnungen 106 radial bezogen auf die Drehachse X gesehen in einem Bereich zwischen dem Saugmund 102 und dem Außenumfang des Laufrades 100 in die Strömungskanäle 108. D. h. die Öffnungen 106 münden in einen radialen Mittelbereich des ersten Strömungsweges durch das Laufrad 100. Die Öffnungen 106 und die Strömungskanäle 108 bilden mit ihren Abschnitten radial außenseitig der Öffnungen 106 bilden zweite Strömungswege, welche dem Laufradteil 50, wie er anhand von Fig. 4 beschrieben wurde, entspricht. Der Laufradteil 78 wird durch den radial innenliegenden Laufradteil, d. h. in Strömungsrichtung zwischen dem Saugmund 102 und den Öffnungen 106 gebildet. Die Öffnungen 106 sind dem Ringraum 90 zugewandt, sodass Heizmedium über den Verbindungskanal 88 in diese Öffnungen 106 eintreten kann. Austrittsseitig der Öffnungen 106 liegt somit in den Strömungskanälen 108 in diesem Ausführungsbeispiel der Mischpunkt 52 gemäß Fig. 4.

Das Laufrad 100 weist an seinem Außenumfang, d. h. am Außenumfang der Deckscheibe 104 einen axial gerichteten Kragen 110 auf, welcher am Innenumfang des Pumpengehäuses 78' anliegt und so den Ringraum 90 gegenüber dem Druckraum 76 abdichtet. Mit dem in Fig. 10 bis 12 gezeigten Umwälzpumpenaggregat 46 mit integrierter Mischeinrichtung 44 kann eine Temperaturregelung des Heizmediumstroms, welcher dem Fußbodenheizkreis 2 zugeführt wird, durchgeführt werden, wie sie anhand der Fig. 4 und 15 vorangehend beschrieben wurde.

Bei den drei beispielhaft beschriebenen erfindungsgemäßen Lösungen ist eine Regelung der Temperatur durch Einstellung des Mischungsverhältnisses allein durch Drehzahländerung beschrieben worden. Es ist jedoch zu verstehen, dass eine derartige Vorlauftemperaturregelung auch in Kombination mit einem zusätzlichen Ventil Rₕₒₜ in der Vorlaufleitung 18 und/oder einem Ventil R_{cold} in der Rücklaufleitung 16 realisiert werden könnte. Dabei können die Ventile Rₕₒₜ bzw. R_{cold} gegebenenfalls miteinander gekoppelt sein oder gemeinsam als Drei-Wege-Ventil ausgebildet sein. Ein elektrischer Antrieb dieser Ventile könnte von einer gemeinsamen Steuereinrichtung 34, welche auch die Drehzahl des Antriebsmotors 30 steuert bzw. regelt, angesteuert werden. So kann durch Steuerung der Ventile zusammen mit der Steuerung der Drehzahl des Antriebsmotors 30 das Mischungsverhältnis und damit die Temperatur in der Vorlaufleitung für die Fußbodenheizung geregelt bzw. gesteuert werden. Dadurch kann zum einen ein größerer Regelbereich erreicht werden. Zum anderen können durch größere Ventilöffnungsgrade die Verluste reduziert werden. So lässt sich beispielsweise die Drehzahl nur kurzfristig erhöhen, um eine erhöhte Menge von erwärmtem Heizmedium zuzumischen.

Die Erfindung wurde am Beispiel einer Heizungsanlage beschrieben. Es ist jedoch zu verstehen, dass die Erfindung in entsprechender Weise auch in anderen Anwendungen, in welchen zwei Flüssigkeitsströmungen gemischt werden sollen, Verwendung finden kann. Eine mögliche Anwendung ist beispielsweise ein System zur Einstellung einer Brauchwassertemperatur, wie es in Druckerhöhungspumpen für die Brauchwasserversorgung, in sogenannten Shower-Booster-Pumps, üblich ist.

### Bezugszeichenliste

- 2: Fußbodenheizung, Fußbodenheizkreis
- 4: Heizkessel
- 6: Umwälzpumpenaggregat
- 8: Umwälzpumpenaggregat
- 10: Laufrad
- 12: Antriebsmotor
- 14: Mischpunkt
- 16: Rücklaufleitung
- 18: Vorlaufleitung
- R, Rₕₒₜ, R_{cold}: Durchflussregulierventile
- 20: Mischpunkt
- 22: Mischeinrichtung
- 24: Umwälzpumpenaggregat
- 26, 28: Laufräder bzw. Anordnungen von Laufradschaufeln
- 30: Antriebsmotor
- 34: Steuereinrichtung
- 36: Temperatursensor
- 38: Vorlaufleitung für die Fußbodenheizung 2
- 39: Schnittpunkt
- 40, 42: Mischbereich
- 44: Mischeinrichtung
- 46: Umwälzpumpenaggregat
- 48, 50: Laufradteile bzw. Strömungswege
- 52: Mischpunkt
- 54: Mischbereich
- 56: Elektronikgehäuse
- 58: Motorgehäuse
- 60: Stator
- 62: Spaltrohr
- 64: Rotor
- 66: Rotorwelle
- 68: Laufrad
- 70: Saugmund
- 72: vordere Deckscheibe
- 74: zweiter Saugmund, zweite Eintrittsöffnung
- 76: Druckstutzen
- 78, 78': Pumpengehäuse
- 80: Druckstutzen
- 82: Saugleitung
- 84: Saugstutzen
- 86: zweiter Saugstutzen
- 88: Verbindungskanal
- 90: Ringraum
- 92: Ringelement
- 94: Dichtelement
- 96: Rückschlagventil
- 98: Ventilelemente
- 100: Laufrad
- 102: Saugmund
- 104: Deckscheibe
- 106: Öffnungen, zweite Eintrittsöffnungen
- 108: Strömungskanäle
- 110: Kragen
- s: Strömungsrichtung
- X: Drehachse

## Patentansprüche

1. Verfahren zum Betrieb einer Mischeinrichtung in einer Heizungsanlage, in welcher zwei Heizmediumströme unterschiedlicher Temperaturen zum Einstellen der Temperatur des Heizmediums gemischt werden, wobei die Mischeinrichtung zumindest ein das Heizmedium förderndes Umwälzpumpenaggregat (24; 46) aufweist, **dadurch gekennzeichnet, dass**
das zumindest eine Umwälzpumpenaggregat (24; 46) in seiner Drehzahl in Abhängigkeit eines in dem Heizmedium erfassten Temperaturwertes geregelt wird.

2. Verfahren nach Anspruch 1, **dadurch gekennzeichnet, dass** die Drehzahl des zumindest einen Umwälzpumpenaggregates (24; 46) derart geregelt wird, dass der erfasste Temperaturwert einem vorbestimmten Temperatursollwert entspricht oder angenähert wird, wobei der Temperatursollwert vorzugsweise abhängig von einer Raumtemperatur und/oder einer Außentemperatur vorgegeben wird.

3. Verfahren nach Anspruch 1 oder 2, **dadurch gekennzeichnet, dass** die beiden Heizmediumströme an einem Mischpunkt (20) gemischt werden und der Temperaturwert stromabwärts des Mischpunktes (20) in dem Heizmedium erfasst wird.

4. Verfahren nach einem der vorangehenden Ansprüche, **dadurch gekennzeichnet, dass** das zumindest eine Umwälzpumpenaggregat (24; 46) zumindest einen der beiden Heizmediumströme bewirkt, wobei das zumindest eine Umwälzpumpenaggregat (24; 46) vorzugsweise das Heizmedium stromabwärts eines Mischpunktes (20) der beiden Heizmediumströme fördert.

5. Verfahren nach einem der vorangehenden Ansprüche, **dadurch gekennzeichnet, dass** das zumindest eine Umwälzpumpenaggregat (24; 46), welches in seiner Drehzahl (n) in Abhängigkeit eines in dem Heizmedium erfassten Temperaturwertes geregelt wird, ein erstes Umwälzpumpenaggregat (24; 46) bildet und dass ein zweites Umwälzpumpenaggregat (6) vorhanden ist, welches einen der Heizmedienströme bewirkt.

6. Verfahren nach Anspruch 5, **dadurch gekennzeichnet, dass** das zweite Umwälzpumpenaggregat (6) in seiner Drehzahl in Abhängigkeit eines Druckes und/oder eines Durchflusses des Heizmediums oder in Abhängigkeit eines in dem Heizmedium erfassten Temperaturwertes geregelt wird.

7. Verfahren nach einem der vorangehenden Ansprüche, **dadurch gekennzeichnet, dass** vor Durchführung einer Drehzahlregelung des Umwälzpumpenaggregates (24; 46) in Abhängigkeit eines in dem Heizmedium erfassten Temperaturwertes eine Voreinstellung mit folgenden Schritten vorgenommen wird:
- Einstellen des Umwälzpumpenaggregates (24; 46) auf einen erforderlichen Differenzdruck
- Voreinstellen der beiden Heizmediumströme zum Erreichen einer aktuell gewünschten Temperatur des Heizmediums.

8. Mischeinrichtung, welche ausgebildet ist zur Verwendung in einer Heizungsanlage zum Mischen zweier Heizmediumströme, mit zumindest einem das Heizmedium fördernden Umwälzpumpenaggregat (24; 46), welches in seiner Drehzahl (n) einstellbar ausgebildet ist, sowie
zumindest einem Temperatursensor (36), welcher derart angeordnet ist, dass er einen Temperaturwert des Heizmediums erfasst, **dadurch gekennzeichnet, dass**
das Umwälzpumpenaggregat (24; 46) eine Steuereinrichtung (34) aufweist, welche derart ausgebildet ist, dass sie die Drehzahl (n) in Abhängigkeit eines von dem Temperatursensor (36) erfassten Temperaturwertes einstellt.

9. Mischeinrichtung nach Anspruch 8, **dadurch gekennzeichnet, dass** der Temperatursensor (36) an einem Strömungsweg (38) stromabwärts eines Mischpunktes (20) angeordnet ist, an welchem die beiden Heizmediumströme gemischt werden.

10. Mischeinrichtung nach Anspruch 8 oder 9, **dadurch gekennzeichnet, dass** ein Mischpunkt (20) vorhanden ist, an welchem die beiden Heizmediumströme gemischt werden, und dass das zumindest eine Umwälzpumpenaggregat in einem Strömungsweg stromabwärts des Mischpunktes angeordnet ist.

11. Mischeinrichtung nach einem der Ansprüche 8 bis 10, **dadurch gekennzeichnet, dass** das zumindest eine Umwälzpumpenaggregat (24; 26), welches in seiner Drehzahl (n) in Abhängigkeit eines in dem Heizmedium erfassten Temperaturwertes geregelt wird, ein erstes Umwälzpumpenaggregat bildet und dass ein zweites Umwälzpumpenaggregat (6) vorhanden ist, welches vorzugsweise in einem der Heizmedienströme gelegen ist.

12. Mischeinrichtung nach Anspruch 11, **dadurch gekennzeichnet, dass** das zweite Umwälzpumpenaggregat (6) eine von dem ersten Umwälzpumpenaggregat (24; 26) unabhängige Steuereinrichtung aufweist, welche vorzugsweise derart ausgebildet ist, dass sie die Drehzahl des zweiten Umwälzpumpenaggregates in Abhängigkeit eines Druckes und/oder Durchflusses des Heizmediums einstellt.

13. Mischeinrichtung nach Anspruch 11, **dadurch gekennzeichnet, dass** das erste (24; 46) und zweite (6) Umwälzpumpenaggregat eine gemeinsame Steuereinrichtung und/oder zwei miteinander kommunizierende Steuereinrichtungen aufweisen, welche derart ausgebildet sind, dass das erste (24; 46) und das zweite (6) Umwälzpumpenaggregat in ihren Drehzahlen in Abhängigkeit des von dem Temperatursensor (36) erfassten Temperaturwertes geregelt werden.

14. Mischeinrichtung nach einem der Ansprüche 11 bis 13, **dadurch gekennzeichnet, dass** das erste (24; 46) oder das zweite (6) Umwälzpumpenaggregat derart angeordnet ist, dass es zusätzlich einen weiteren Heizkreis mit Heizmedium versorgt.

15. Mischeinrichtung nach einem der Ansprüche 8 bis 14, **dadurch gekennzeichnet, dass** die Mischeinrichtung zwei Eingänge (84; 86) für die beiden Heizmediumströme aufweist, wobei an zumindest einem der beiden Eingänge (84; 86) und vorzugsweise an beiden Eingängen (84, 86) ein Einstellventil (R) zum Einstellen des Durchflusses durch den jeweiligen Eingang (84; 86) angeordnet ist.
